# EUROPÄISCHE PATENTSCHRIFT

(11) **EP 1 419 001 B1**
(45) Veröffentlichungstag und Bekanntmachung des Hinweises auf die Patenterteilung: **06.04.2005**
(21) Anmeldenummer: 02772037.4
(22) Anmeldetag: 28.08.2002
(51) Int. Cl.: B01D 35/30, B01D 27/08, B65B 7/28

(54) **GEHÄUSE**
HOUSING
BOITIER

(30) Priorität: 31.08.2001 DE 10142442
(43) Veröffentlichungstag der Anmeldung: 19.05.2004
(73) Patentinhaber: SIEMENS AKTIENGESELLSCHAFT, 80333 München (DE)
(72) Erfinder: WEHNER, Holger, 65812 Baden Soden-Altenhain (DE)
(86) Internationale Anmeldenummer: PCT/DE2002/003176
(87) Internationale Veröffentlichungsnummer: WO 2003/024566

(56) Entgegenhaltungen:
- EP-A- 0 631 932
- EP-A- 0 815 913
- DE-A- 3 143 093
- DE-C- 553 032
- US-A- 4 089 152
- US-A- 5 571 412
- US-A- 5 817 234

## Beschreibung

Gegenstand der Erfindung ist ein Gehäuse für ein Bauteil, vorzugsweise ein druckbelastetes Gehäuse, bestehend aus zwei Gehäusehälften, die einen Boden, einen Deckel und einen dazwischenliegenden Abschnitt bilden.

Es ist bekannt, Gehäuse zur Aufnahme von Bauteilen aus mindestens zwei Gehäusehälften herzustellen (US 5,817,234; US 5,571,412; EP 0 815 913 A1; DE 31 43 093 A1; US 4,089,152; DE 553 032, EP 0 631 932 A1). Die Gehäusehälften weisen dabei in nahezu allen Bereichen die gleiche Wandstärke auf. Die zweiteilige Ausgestaltung ermöglicht eine einfache Montage von Bauteilen in dem Gehäuse. Hierzu wird eine Gehäusehälfte oftmals als Deckel ausgebildet, die die andere Gehäusehälfte verschließt. Aus Gewichts- und Kostengründen werden die Gehäusehälften dünnwandig gestaltet. Als Material kann sowohl Metall als auch Kunststoff zum Einsatz kommen. Während sich Metall in Abhängigkeit von der Wandstärke und der Geometrie besonders einfach durch Tiefziehen oder Fliesspressen umformen läßt, werden Kunststoffgehäuse vielfach mittels Spritzgießens hergestellt.

In Abhängigkeit von der Verwendung des Gehäuses sind die Betriebsparameter bei der Gestaltung des Gehäuses zu beachten. Insbesondere bei druckbelasteten Gehäusen muß die Gehäusewandung eine entsprechende Festigkeit aufweisen. Eine höhere Festigkeit ist konstruktiv besonders einfach mit einer Erhöhung der Wandstärke erreichbar. Nachteilig hierbei ist der erhöhte Materialeinsatz, der neben dem höheren Gewicht auch zu höheren Materialkosten führt. Darüber hinaus sind der beliebigen Erhöhung der Wandstärke Grenzen in der Herstellung gesetzt. So ist das Tiefziehen ab einer bestimmten Wandstärke nicht mehr rentabel. Gehäuse mit großen Wandstärken lassen sich dann nur noch aus mehreren Einzelteilen herstellen, die anschließend gefügt werden.

Das Spritzgießen von Kunststoff ist ebenfalls ab einer bestimmten Wandstärke unökonomisch, da sich die Zykluszeiten infolge des höheren Materialeinsatzes in Verbindung mit den verlängerten Abkühlzeiten vergrößern. Um dennoch das Spritzgießen als Herstellungsverfahren nutzen zu können, ist man dazu übergegangen, die Festigkeit durch andere konstruktive Maßnahmen zu erhöhen. Eine mögliche Gestaltung ist die Verstärkung der Gehäusewandung mittels Rippen. Auf diese Weise kann das Gehäuse mit einer relativ dünnen Gehäusewandung hergestellt werden. Nachteilig an dieser Ausgestaltung ist der konstruktiv komplizierte Aufbau. Ein derartiger Aufbau bedingt in der Herstellung entsprechende Spritzgießwerkzeuge, die infolge der aufwendigen Geometrie sehr kostenintensiv sind.

Der Erfindung liegt die Aufgabe zugrunde, ein Gehäuse zu schaffen, dass unter Verwendung einfacher Herstellungsverfahren für erhöhte Druckbelastungen geeignet ist.

Gelöst wird die Aufgabe mit den Merkmalen des Anspruchs 1. Vorteilhafte Ausgestaltungen sind in den Unteransprüchen beschrieben.

Das erfindungsgemäße Gehäuse, dessen Festigkeit durch die Wandstärke des Gehäuses gebildet wird, besteht aus zwei Gehäusehälften, die den Boden, den Deckel und einen dazwischen liegenden Abschnitt umfassen. Teile der Wandung jeder Gehäusehälfte sind als umlaufender Rand ausgebildet, wobei sich die Ränder der beiden Gehäusehälften im gefügten Zustand überlappen. Die überlappende Anordnung der Ränder bewirkt eine Erhöhung der Wandstärke im Bereich der Ränder. Auf diese Weise tragen beide Ränder zur Bildung der notwendigen Wandstärke bei, um die erforderliche Festigkeit zu erreichen. Der wesentliche Vorteil dieser Anordnung besteht darin, dass die Ränder eine geringere Wandstärke aufweisen können, wodurch sich die Gehäusehälften mit Herstellungsverfahren wie Fliesspressen, Tiefziehen oder Spritzgießen kostengünstig erzeugen lassen. Zum Fügen der Gehäusehälften können verschiedene Fügeverfahren wie Kleben, Laser- oder Ultraschallschweißen zum Einsatz kommen.

In vorteilhafter Ausgestaltung erstrecken sich die Ränder über den zwischen Boden und Deckel liegenden Abschnitt. So ist es denkbar, dass sich die Ränder nur über einen Teil ihrer axialen Erstreckung überlappen.

Als besonders günstig hat sich jedoch die Überlappung der Ränder über ihre gesamte axiale Erstreckung erwiesen. Auf diese Weise können die Ränder über ihre gesamte axiale Erstreckung eine geringere Wandstärke aufweisen, was die Herstellung der Gehäusehälften weiter begünstigt.

In vorteilhafter Weiterbildung der Erfindung sind der Boden und der Deckel gewölbt. Die gewölbte Ausbildung zeichnet sich durch besonders hohe Festigkeitswerte aus, so dass eine Festigkeit, die mit der des Abschnitts zwischen Boden und Deckel vergleichbar ist, bereits mit einer wesentlich geringeren Wandstärke erreicht wird. Das wiederum hat zur Folge, dass bei entsprechender Gestaltung der Boden und/oder der Deckel die gleiche Wandstärke wie der Rand der entsprechenden Gehäusehälfte besitzt. Damit weist die Wandung der Gehäusehälfte eine gleichbleibende Wandstärke ohne sprunghafte Übergänge auf. Die Herstellung wird dadurch weiter vereinfacht. Insbesondere beim Spritzgießen wirkt sich diese Gestaltung vorteilhaft aus, da sprunghafte Übergänge von Wandungen einen erhöhten Aufwand, z.B. längere Abkühlzeiten, erfordern. Der Querschnitt des Abschnitts zwischen Boden und Deckel kann dank der Erfindung beliebig, z.B. kreisförmig, oval, viereckig, sein.

Des Weiteren hat es sich als günstig herausgestellt, die Ränder hin zu den offenen Seiten der Gehäusehälften mit einer abnehmenden Wandstärke auszubilden. Durch die spiegelbildliche Anordnung der Ränder im gefügten Zustand ist eine konstanten Wandstärke über den gesamten Bereich der Ränder gewährleistet. Der Vorteil der verminderten Wandstärke liegt in der Fertigung, da die Gehäuseteile auf diese Weise mit Entformungsschrägen gestaltet werden können.

In Abhängigkeit vom verwendeten Fügeverfahren ist es vorteilhaft, mindestens einen umlaufenden Bund im Bereich der Ränder anzuordnen, wobei der oder die Bünde auf den Seiten der Ränder angeordnet sind, die sich einander gegenüber liegen. Damit erhält man definierte Anlageflächen beider Ränder, was insbesondere bei Rändern, die sich über den gesamten Abschnitt zwischen Boden und Deckel erstrecken und sich vollständig überlappen, entscheidend ist. Das Schweißen mittels Laser oder Ultraschall wird bei Kunststoffgehäusen erheblich vereinfacht, da das Schweißen auf dem Bereich des umlaufenden Bundes beschränkt werden kann.

Besonders vorteilhaft ist die Anordnung je eines Bundes in dem Bereich eines Randes, der der offenen Seite der Gehäusehälfte abgewandt ist. Bei Rändern mit abnehmender Wandstärke lassen sich Bünde besonders einfach dadurch bilden, dass der Bund nur auf der dem offenen Ende der Gehäusehälfte zugewandten Seite eine Begrenzungsfläche besitzt.

Damit wird ein Hinterschnitt vermieden und die Gehäusehälfte ist trotz Bund gut entformbar.

An mehreren Ausführungsbeispielen wird die Erfindung näher erläutert. Die Figuren zeigen in
- Fig. 1:: einen Schnitt durch ein erfindungsgemäßes Gehäuse mit einem Filter,
- Fig. 2:: eine vergrößerte Schnittdarstellung der Gehäusewandung gemäß Fig. 1,
- Fig. 2a:: einen Schnitt gemäß Fig. 2 mit einer von Fig. 2 verschiedenen Wandung,
- Fig. 3:: eine vergrößerte Darstellung des Bundes.

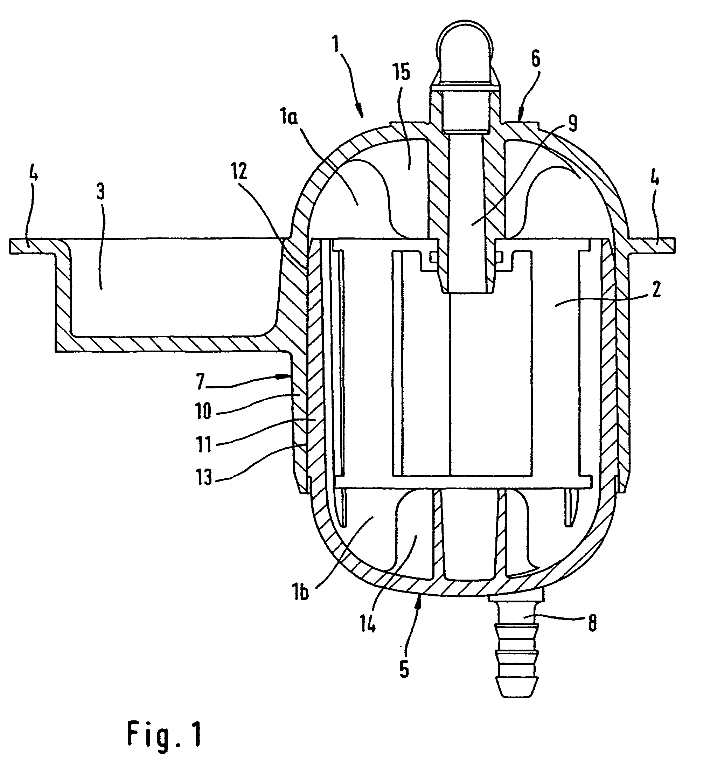

In der Fig. 1 ist ein Gehäuse 1 aus Kunststoff mit einem darin angeordneter Filter 2 für ein Kraftfahrzeug dargestellt. Das Gehäuse 1 ist Bestandteil eines Deckels 3, der mittels eines Flansches 4 eine Öffnung in einen Kraftstoffbehälter verschließt. Das Gehäuse 1 besitzt einen Boden 5, einen Deckel 6 und einen dazwischenliegenden, zylinderförmigen Abschnitt 7. Der Boden 5 enthält einen Anschlußstutzen 8, der mit einer nicht dargestellten Kraftstoffleitung verbunden ist, und über den der aus dem Kraftstoffbehälter geförderte Kraftstoff in das Gehäuse 1 eintritt. Nach dem Passieren des Filters 2 verläßt der Kraftstoff das Gehäuse 1 über einen Austrittsstutzen 9, der ebenfalls mit einer nicht dargestellten Kraftstoffleitung verbunden ist, und über die der Kraftstoff zur Brennkraftmaschine gefördert wird. Das Gehäuse 1 wird von zwei Gehäusehälften 1a, 1b gebildet. Die Gehäusehälfte 1a besteht aus dem Deckel 6 und einem umlaufenden, zylinderförmigen Rand 10, der den äußeren Teil der Wandung des Abschnitts 7 bildet. Der Rand 10 erstreckt sich in axialer Richtung über die gesamte Länge des Abschnitts 7. Die Gehäusehälfte 1b besteht aus dem Bo den 5 und einem ebenfalls umlaufenden, zylinderförmigen Rand 11, der den inneren Teil der Wandung des Abschnitts 7 bildet. Der Rand 11 erstreckt sich ebenfalls in axialer Richtung über die gesamte Länge des Abschnitts 7. Bei dem in Fig. 1 dargestellten Gehäuse überlappen sich die beiden Ränder 10, 11 vollständig, bezogen auf ihre axiale Erstrekkung. Beide Ränder 10, 11 bilden zusammen die Wandung des Abschnitts 7 mit der notwendigen Festigkeit. Beide Ränder 10, 11 sind mit zu dem jeweils offenen Ende der Gehäusehälften 1a, 1b mit abnehmender Wandstärke ausgebildet. Die Wandstärke des Randes 10 nimmt beginnend am Übergang des Deckels 6 zum Rand 10 in Richtung Boden 5 ab. Durch die analoge Ausbildung des Randes 11 und dessen spiegelbildliche Anordnung zum Rand 10 besitzt der Abschnitt 7 in jedem Bereich dieselbe Wandstärke. Der sich an den entsprechenden Rand 10, 11 anschließende Deckel 6, bzw. Boden 5 ist gewölbt ausgebildet. Die Kalottenform von Boden 5 und Dekkel 6 zeichnet sich durch eine hohe Festigkeit bei geringer Wandstärke aus. Infolge der über die geometrische Form erreichten Festigkeit ist die Wandstärke des Bodens 5 und des Deckels 6 annähernd gleich der Wandstärke des jeweiligen Randes 10, 11. Aufgrund der geometrischen Form des Abschnitts 7 benötigt dieser für eine annähernd gleiche Festigkeit wie der Deckel 6 und der Boden 5 die doppelte Wandstärke. Zur druckfesten Verbindung der Gehäusehälften 1a, 1b sind diese mittels Laserschweißen nach dem Durchstrahlschweißen gefügt, indem die Gehäusehälften im Bereich des Abschnitts 7 mit jeweils einer umlaufenden Schweißnaht 12, 13 verbunden sind, wobei sich die Schweißnähte 12, 13 nahe des Übergangs zum Boden 5, bzw. Deckel 6 befindet. Der Filter 2 wird im Gehäuse 1 mittels im Boden 5 und Deckel 6 angeordneter Rippen 14, 15 aufgenommen und gelagert.

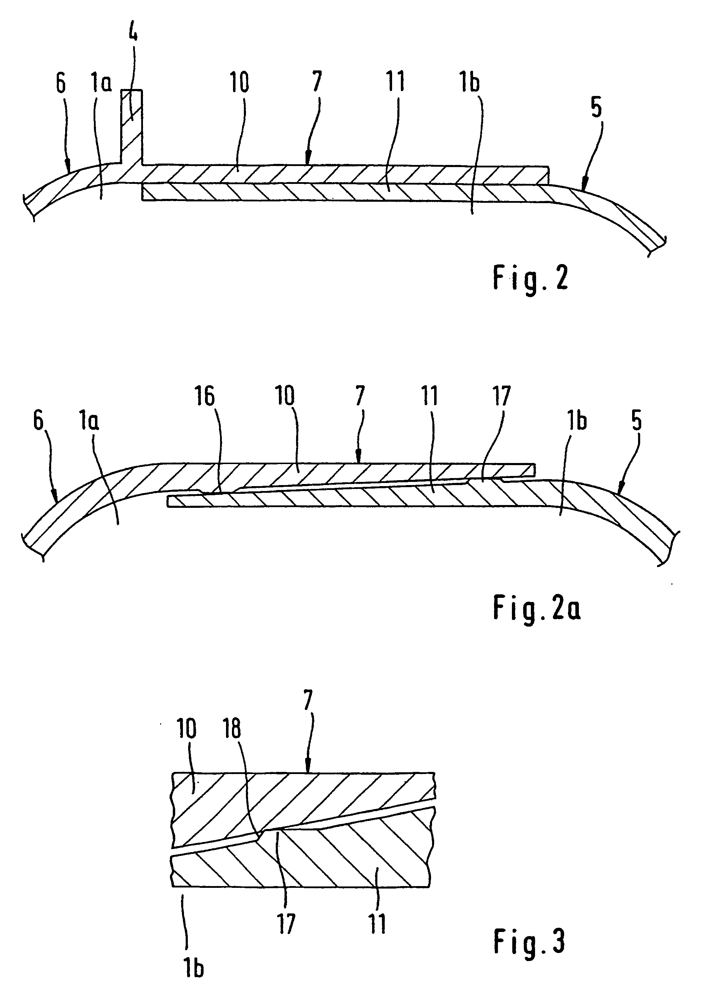

Figur 2 zeigt den zylinderförmigen Abschnitt 7, der von den Rändern 10, 11 der Gehäusehälften 1a, 1b gebildet wird. Die Ränder 10, 11 weisen eine konstante Wandstärke auf und überlappen sich vollständig über ihre axiale Erstreckung Bei einer Wandstärke der Ränder 10, 11 von je 2,5 mm - 3 mm besitzt das Gehäuse eine ausreichende Festigkeit, um einer Dauerbelastung von 8 - 10 bar standzuhalten. Der Berstdruck liegt mit über 30 bar wesentlich höher. Die in Figur 2a schematisch dargestellte Ausführungsform zeigt ebenfalls den von den Rändern 10, 11 gebildeten Abschnitt 7. Die Ränder 10, 11 sind mit einer zu dem jeweiligen offenen Ende der Gehäusehälften 1a, 1b abnehmenden Wandstärke ausgebildet. Jeder Rand 10, 11 besitzt in dem Bereich, der dem offenen Ende der Gehäusehälfte 1a, 1b abgewandt ist, einen umlaufenden Bund 16, 17. Die Bünde 16, 17 sind auf den einander gegenüberliegenden Seiten der Ränder 10, 11 angeordnet. Das spätere Verschweißen der beiden Gehäusehälften 1a, 1b erfolgt im Bereich der Bünde 16, 17. Die Bünde 16, 17 besitzen eine zur Symmetrieachse parallele Stirnfläche. Es sind aber auch andere Ausgestaltungen, z.B. konkav, konvex, denkbar.

Fig. 3 zeigt den Abschnitt 7 im Bereich des Bundes 17. Die Ränder 10, 11 besitzen eine abnehmende Wandstärke. Der Bund 17 besitzt aufgrund der veränderlichen Wandstärke nur auf der dem offenen Ende der Gehäusehälfte 1b zugewandten Seite einen Absatz 18. Auf der gegenüberliegenden Seite geht der Bund 17 mit einem Knick in den Rand 11 über.

## Patentansprüche

1. Gehäuse (1), bestehend aus zwei Gehäusehälften (1a, 1b), die einen Boden (5), einen Deckel (6) und einen dazwischen eingeschlossenen Abschnitt (7) bilden, wobei das Gehäuse (1) eine Gehäusewandung mit für eine vorgesehene Festigkeit ausreichender Wandstärke besitzt, und wobei der eingeschlossene Abschnitt (7) Überlappungen der Gehäusehälften (1a, 1b) aufweist und Teile der Wandung beider Gehäusehälften (1a, 1b) aufweist und Teile der Wandung beider Gehäusehälften (1a, 1b) im Bereich der Überlappungen jeweils als umlaufender Rand (10, 11) ausgebildet sind, **dadurch gekennzeichnet, dass** die von den überlappenden Rändern der Gehäusehälften (1a, 1b) gebildete Gesamt-Wandstärke im stoffschlüssig gefügten Zustand im Wesentlichen dieselbe Festigkeit aufweist, wie die übrigen Bereiche der Gehäusewandung.

2. Gehäuse nach Anspruch 1, **dadurch gekennzeichnet, dass** sich die Ränder (10, 11) über den zwischen dem Boden (5) und dem Deckel (6) liegenden Abschnitt (7) erstrecken.

3. Gehäuse nach Anspruch 1 und 2, **dadurch gekennzeichnet, dass** sich die Ränder (10, 11) über einen Teil ihrer axialen Erstreckung überlappen.

4. Gehäuse nach Anspruch 1 und 2, **dadurch gekennzeichnet, dass** sich die Ränder (10, 11) über ihre axiale Erstrekkung vollständig überlappen.

5. Gehäuse nach mindestens einem der Ansprüche 1 bis 4, **dadurch gekennzeichnet, dass** der Boden (5) und der Deckel (6) gewölbt sind.

6. Gehäuse nach Anspruch 5, **dadurch gekennzeichnet, dass** der Rand (10, 11) mit gleichbleibender Wandstärke in den Boden (5) oder den Deckel (6) übergeht.

7. Gehäuse nach mindestens einem der Ansprüche 1 bis 6, **dadurch gekennzeichnet, dass** die Ränder (10, 11) mit einer sich zum offenen Ende der jeweiligen Gehäusehälfte (1a, 1b) verringernden Wandstärke ausgebildet sind.

8. Gehäuse nach mindestens einem der Ansprüche 1 bis 7, **dadurch gekennzeichnet, dass** auf den einander zugewandten Seiten der Ränder (10, 11) mindestens ein umlaufender Bund (16, 17) angeordnet ist.

9. Gehäuse nach mindestens einem der Ansprüche 1 bis 8, **dadurch gekennzeichnet, dass** auf jeder der einander zugewandten Seiten der Ränder (10, 11) ein umlaufender Bund (16, 17) angeordnet ist.

10. Gehäuse nach Anspruch 9, **dadurch gekennzeichnet, dass** der Bund (16, 17) nur auf der dem offenen Ende der Gehäusehälfte (1a, 1b) zugewandten Seite einen Absatz (18) aufweist.

11. Gehäuse nach mindestens einem der Ansprüche 1 bis 10, **dadurch gekennzeichnet, dass** die Gehäusehälften (1a, 1b) mittels Schweißen, insbesondere Laserschweißen oder Ultraschallschweißen, gefügt sind, vorzugsweise im Bereich des Bundes (16, 17).

12. Gehäuse nach mindestens einem der Ansprüche 1 bis 7, **dadurch gekenzizeichnet, dass** die Gehäusehälften (1a, 1b) mittels Kleben gefügt sind.

## Claims

1. Housing (1), composed of two housing halves (1a, 1b) which form a bottom (5), a lid (6) and a section (7) enclosed between them, the housing (1) having a housing wall with a wall thickness which is sufficient for a designated strength, and the enclosed section (7) having overlaps of the housing halves (1a, 1b) and parts of the wall of the two housing halves (1a, 1b) and parts of the wall of the two housing halves (1a, 1b) being designed in each case as a peripheral edge (10, 11) in the region of the overlaps, **characterized in that** the entire wall thickness formed by the overlapped edges of the housing halves (1a, 1b) when joined materially have essentially the same strength as the remaining regions of the housing wall.

2. Housing according to Claim 1, **characterized in that** the edges (10, 11) extend over the section (7) lying between the bottom (5) and the lid (6).

3. Housing according to Claim 1 and 2, **characterized in that** the edges (10, 11) overlap over part of their axial extent.

4. Housing according to Claim 1 and 2, **characterized in that** the edges (10, 11) completely overlap over their axial extent.

5. Housing according to at least one of Claims 1 to 4, **characterized in that** the bottom (5) and the lid (6) are curved.

6. Housing according to Claim 5, **characterized in that** the edge (10, 11) merges with a constant wall thickness into the bottom (5) or the lid (6).

7. Housing according to at least one of Claims 1 to 6, **characterized in that** the edges (10, 11) are designed with a wall thickness which is reduced toward the open end of the particular housing half (1a, 1b).

8. Housing according to at least one of Claims 1 to 7, **characterized in that** at least one peripheral collar (16, 17) is arranged on the mutually facing sides of the edges (10, 11).

9. Housing according to at least one of Claims 1 to 8, **characterized in that** a peripheral collar (16, 17) is arranged on each of the mutually facing sides of the edges (10, 11).

10. Housing according to Claim 9, **characterized in that** the collar (16, 17) has a step (18) only on the side which faces the open end of the housing half (1a, 1b) .

11. Housing according to at least one of Claims 1 to 10, **characterized in that** the housing halves (1a, 1b) are joined by means of welding, in particular laser welding or ultrasonic welding, preferably in the region of the collar (16, 17).

12. Housing according to at least one of Claims 1 to 7, **characterized in that** the housing halves (1a, 1b) are joined by means of bonding.

## Revendications

1. Boîtier (1) composé de deux moitiés de boîtier (1a, 1b), qui forment un fond (5), un couvercle (6) et, comprise entre ces deux derniers, une section (7), où le boîtier (1) a une paroi ayant une épaisseur suffisante pour une stabilité prévue et où la section comprise entre le fond (5) et le couvercle (6) comporte des chevauchements des deux moitiés de boîtier (1a, 1b) et des parties de la paroi des deux moitiés de boîtier (1a, 1b) sont conçues, dans la zone des chevauchements, chacune sous la forme de bordure circulaire (10, 11), **caractérisé par le fait que** l'épaisseur totale de paroi formée par les bordures chevauchantes des deux moitiés de boîtier (1a, 1b) a, dans l'état assemblé par assemblage homogène (même matière), pour l'essentiel, la même stabilité que les autres zones de la paroi du boîtier.

2. Boîtier selon la revendication 1 **caractérisé par le fait que** les bordures (10, 11) s'étendent sur une section (7) se trouvant entre le fond (5) et le couvercle (6).

3. Boîtier selon la revendication 1 et 2 **caractérisé par le fait que** les bordures (10, 11) se chevauchent sur une partie de leur longueur dans le sens axial.

4. Boîtier selon la revendication 1 et 2 **caractérisé par le fait que** les bordures (10, 11) se chevauchent complètement sur leur longueur dans le sens axial.

5. Boîtier selon au moins l'une des revendications 1 à 4 **caractérisé par le fait que** le fond (5) et le couvercle (6) sont bombés.

6. Boîtier selon la revendication 5 **caractérisé par le fait que** la bordure (10, 11) se prolonge avec une épaisseur de paroi constante dans le fond (5) ou le couvercle (6).

7. Boîtier selon au moins l'une des revendications 1 à 6 **caractérisé par le fait que** les bordures (10, 11) sont conçues avec une épaisseur de paroi diminuant vers l'extrémité ouverte de la moitié de boîtier (1a, 1b) respective.

8. Boîtier selon au moins l'une des revendications 1 à 7 **caractérisé par le fait que** au moins un épaulement circulaire (16, 17) est disposé sur les côtés des bordures (10, 11) tournés l'un vers l'autre.

9. Boîtier selon au moins l'une des revendications 1 à 8 **caractérisé par le fait qu'**un épaulement circulaire (16, 17) est disposé sur chacun des côtés tournés l'un vers l'autre des bordures (10, 11).

10. Boîtier selon la revendication 9 **caractérisé par le fait que** l'épaulement (16, 17) a un gradin seulement sur le côté tourné vers l'extrémité ouverte de la moitié de boîtier (1a, 1b).

11. Boîtier selon au moins l'une des revendications 1 à 10 **caractérisé par le fait que** les moitiés de boîtier (1a, 1b) sont assemblées par soudage, notamment par soudage au laser ou par soudage aux ultrasons, de préférence dans la zone de l'épaulement (16, 17).

12. Boîtier selon au moins l'une des revendications 1 à 7 **caractérisé par le fait que** les moitiés de boîtier (1a, 1b) sont assemblées par collage.
